(19) Europäisches Patentamt
European Patent Office
Office européen des brevets

(11) Publication number: **0 016 544**
**B1**

(12) # EUROPEAN PATENT SPECIFICATION

(45) Date of publication of patent specification: **02.03.83**

(51) Int. Cl.³: **C 08 J 3/20,** C 08 J 3/12, C 08 L 81/06

(21) Application number: **80300509.9**

(22) Date of filing: **21.02.80**

(54) **Method of making powder compositions of aromatic polyethersulphone and filler, compositions made by the method, and articles made from the compositions.**

(30) Priority: **23.03.79 GB 7910331**

(43) Date of publication of application:
**01.10.80 Bulletin 80/20**

(45) Publication of the grant of the patent:
**02.03.83 Bulletin 83/9**

(84) Designated Contracting States:
**BE DE FR GB IT NL SE**

(56) References cited:
**None**

(73) Proprietor: **IMPERIAL CHEMICAL INDUSTRIES PLC**
**Imperial Chemical House Millbank**
**London SW1P 3JF (GB)**

(72) Inventor: **Ives, Peter John**
**4 Lys Hill Gardens**
**Bengeo Hertford Hertfordshire (GB)**

(74) Representative: **Sheller, Alan et al,**
**Imperial Chemical Industries PLC Legal Department: Patents Thames House North Millbank**
**London SW1P 4QG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Method of making powder compositions of aromatic polyethersulphone and filler, compositions made by the method, and articles made from the compositions

The present invention relates to a method of making a compression-or sinter-mouldable powder composition comprising an aromatic polyethersulphone of certain repeat unit and a powdery filler, to a powder composition made using such a method, and to articles made from the composition.

Aromatic polyethersulphones containing the repeat unit of formula

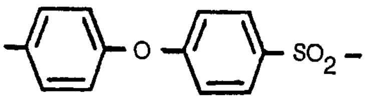

by which are meant in this specification homopolymers only are well known to be exceptionally useful engineering thermoplastics materials since they possess first rate toughness and tensile properties, which properties are retained at elevated temperature for prolonged lengths of time. Thus such thermoplastics are capable of continuous use under load at elevated temperatures. Further, they exhibit excellent fire-resistance, chemical resistance, and electrical insulant properties. As such these thermoplastic aromatic polyethersulphones are eminently suitable as binding materials for forming a matrix containing various powdery fillers so as to provide useful articles whose utility depends to a lesser or greater degree on the properties of the filler material. A filler material may also be advantageously incorporated into a matrix of the polyethersulphone simply to lower the cost of the resulting article, or to reinforce its strength, or to produce some other desirable property e.g. lower density, increased conductivity.

The usual method of producing filled articles from blends of these polyethersulphones with fillers is to employ an extrusion or injection moulding process. However, with very high levels of filler, such techniques are not viable (the maximum level normally depending on the type of filler being used) and it is necessary to employ compression moulding and sinter moulding techniques.

We have now discovered a method of producing a powdery composition of the above-defined aromatic polyethersulphone with a filler in which the level of filler can be very high and wherein such a composition is very suitable for processing into moulded articles using compression moulding or sinter-moulding techniques. The method is also capable of producing compositions having lower levels of filler in which case they can also be used in extrusion or injection moulding techniques for producing moulded articles.

According to the present invention there is provided a method of producing a compression-or sinter-mouldable powder composition comprising an aromatic polyethersulphone as hereinbefore defined and a powdery filler, which method comprises

(a) preparing a viscous but stirrable dispersion of the filler in dichloromethane which dispersion contains said polyethersulphone,

(b) stirring the dispersion to produce a soft solid which breaks down into a powder, and

(c) removing residual dichloromethane from the powder produced in step (b).

There is also provided according to the invention a compression-or sinter-mouldable powder composition when made by the method hereinbefore defined.

There is further provided according to the invention an article produced, particularly by compression or sinter moulding, from a composition made by the method hereinbefore defined.

In step (a) of the method of the invention a viscous but stirrable dispersion, i.e. of a paste-like consistency, is formed. The dispersion is formed either (i) by preparing a dispersion of the filler in dichloromethane and dissolving said polyethersulphone in at least the dichloromethane of the dispersion or (ii) by dissolving said polyethersulphone in dichloromethane and preparing a dispersion of the filler in at least the dichloromethane of the solution. The amount of dichloromethane to use to achieve such a viscous but stirrable dispersion will depend on the viscosity effect of the particular filler being used, and additional dichloromethane (to that already in the dispersion of filler in alternative (i) or to that already in the solution of polyethersulphone in alternative (ii)) should be added if necessary to the mixture in order to obtain the dispersion having a paste-like consistency. Further stirring of the viscous dispersion produces a soft solid of a cheese-like consistency which then breaks down into a powder; this corresponds to step (b) of the method of the invention and usually takes about 10—15 minutes to effect after the initial formation of the dispersion in step (a). Most, if not all, of the dichloromethane can be removed from the composition by continuing to stir the powder after its formation in step (b); any residual dichloromethane can then be removed by a conventional drying technique, e.g. using a circulating air oven. If there are any large lumps in the powder, these can be removed by sieving.

The formation of the soft solid in step (b) is believed to correspond to the formation of a crystalline complex between the polyethersulphone and the dichloromethane, the breakdown of which into a powder is assisted by the filler present.

Any suitable mixing device or devices may be employed to effect steps (a) to (c). For example, a conventional commercially-available paste mixer fitted with a bowl and paddle stirrer may

be used for all three stages; or, for example, where a very high degree of dispersion is required for the filler, the dispersion of dichloromethane and filler in step (a) may be prepared using a high speed shear mixer which can then be transferred to the paste mixer for effecting steps (b) and (c).

It is believed that the method of the invention works only for the polyethersulphone homopolymers as defined above. For example, the method has been found not to work for polyethersulphone homopolymer having repeat units of formula

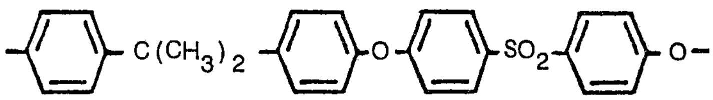

('Udel'®; Union Carbide Corporation) or for a copolymer having repeat units of formulae

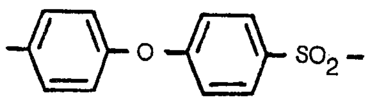

and

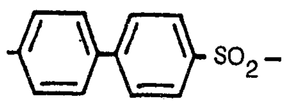

('720P'; ICI). When these polymers are employed, although a paste-like dispersion can be formed, this fails to form a soft solid which breaks down into a powder — instead the paste-like dispersion simply continues to move around in the stirring device.

By a "powdery" filler in the present invention is meant any particulate or short length fibrillar filler materials, the method using alternative (i) being more suitable for fine particulate fillers and the method using alternative (ii) being more suitable for fibrous fillers. The following fillers have, e.g., been successfully used to prepare compositions according to the method of invention: silicone oxide grinding powders (various grades), graphite, hollow glass spheres ('Fillite'®), copper powder, PTFE powder, ground limestone, brake pad compound (presumably containing asbestos fibres), milled glass fibres.

The molecular weight of the polyethersulphone for use according to the invention is not critical. However, it has been found that polyethersulphones of reduced viscosity (RV) below 0.45 are best suited for compression moulding techniques where facile melt flow is required, while polyethersulphones of RV above 0.45 (particularly above 0.50) are preferred for sinter moulding techniques where facile melt flow is not required due to the danger of distorting the moulding on sintering. (Reduced viscosity, RV, as used herein refers to viscosity measurements made at 25°C on a solution of the polymer in dimethyl formamide containing 1 g of polymer in 100 $cm^3$ of solution).

While the method of the invention may be used to incorporate any level of filler, e.g. 10%—90% by weight of filler, based on the weight of the polyethersulphone and the filler, it works particularly well with high levels of filler, e.g. 20%—90% by weight, particularly 40%—90% by weight, possibly because the presence of a high level of filler helps the formation of the powder in step (c). (In terms of volume, the preferred level of filler is 40%—80% by volume, based on the total volume of the polyethersulphone and the filler before use in the claimed method, particularly 40%—75% by volume.) Of course the optimum range of filler level to employ will depend on the particular filler being used and the end article or articles to be produced from the composition containing it. The particular utility of the method of the invention for the production of highly filled compositions means of course that the method is eminently suitable for the production of compression-or sinter-mouldable compositions, since such highly filled compositions cannot be processed using extrusion or injection moulding techniques.

The compositions made by the method of the invention may be used to produce a great variety of useful articles. These include grinding wheels, where the polyethersulphone is used to bind together grinding powder (silicone oxide optionally with industrial diamonds) optionally with other filler (e.g. metal powder, PTFE); brake pads, the polyethersulphone again being used as the binding resin; syntactic polyethersulphone foams containing high levels of hollow glass spheres for use as aerials or radomes (the coverings for aerials or other radio equipment); electric motor brushes made from graphite-filled polyethersulphone; coloured polyethersulphone articles made from masterbatch compositions according to the invention containing very high levels of pigment; polyethersulphone articles made from compositions containing PTFE and/or other fillers.

The present invention is now illustrated by the following examples.

### Example 1

Ground limestone (660 g, calmote® 45M, Tarmac Minerals Ltd) was dispersed into dichloromethane (750 g) using a commercially available paste mixture having a bowl and paddle stirrer. To the stirred dispersion was added aromatic polyethersulphone (340 g) homopolymer having repeat units of formula

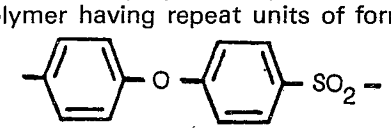

and RV 0.48 — the mixture therefore contained 66% by weight of limestone. A viscous dispersion of paste-like consistency was formed. Stirring was continued and a soft solid of cheese-like consistency was formed after about 10 minutes. This broke down quickly to give fine powder containing a few large lumps (the lumps being due to the crudeness of the mixing technique employed). The powder was stirred (about 1 hour) until most of the dichloromethane had evaporated and then finally dried in an air circulating oven (about 3 hours at 150°C). The powder composition was sieved through 18 mesh (0.85 mm) to remove the large lumps and cold compacted (300 kg/cm$^2$ or 300.10$^5$ Pa pressure) into a 2.5 inch x 6 inch x 0.25 inch (63 mm x 152.4 mm x 6.35 mm) plaque which was then sintered at 330°C for 0.5 hours. The resulting sintered plaque had a caramel colour indicating that it was well sintered. The plaque was cut into 0.5 inch x 6 inch (12.7 mm x 152.4 mm) strips and flexural strength measured according to ASTM D790—71 (16:1 span to thickness ratio); the flexural strength was 68 MN/m$^2$.

Example 2

A powder composition was prepared using substantially the technique of Example 1 except that the level of ground limestone filler used was 70% by weight of the composition. This was cold compacted (300 kg/cm$^2$ or 300.10$^5$ Pa pressure) into an annular block of dimensions 20 mm (outer diameter) x 5.1 mm (inner diameter) x 12.7 mm (height). Sintering was carried out in an oven using the following cycle: room temperature to 330°C at a rate of 30°/hour, lowering of the oven temperature to 280°C this temperature being maintained for 12 hours, cooling at 30°/hour. The block was well sintered (caramel colour). During the sintering process, shrinkage of the block took place, and also some spreading at the base.

Example 3

A powder composition was prepared using substantially the technique of Example 1 except that the filler used was hollow glass spheres ('Fillite'®) having a density of 0.5 g/cm$^3$ which was used at a level of 50% by weight of the composition (approximately 75% by volume). An isostatic flexible bag mould shaped to produce a lion figurine was filled with the powder, sealed and pressurised in an isostatic press to a pressure of 300 kg/cm$^2$ (300.10$^5$ Pa).

The resulting figurine was then placed in an oven and sintered therein using the following temperature cycle: 150°C for 4 hours, heating to 275°C over 6 hours and maintaining this temperature for 1 hour, cooling to 225°C over 7 hours and maintaining this temperature foı 2 hours, cooling to room temperature over 8 hours.

The resulting figurine, which had a density of 0.9 g/cm$^3$ remained in its original shape and showed very little sign of shrinkage; also there were no cracks at the notch-like shaped features of the figurine. This example therefore demonstrates the possibility of using isostatic sinter moulding to produce complex shapes from the powder compositions of the invention.

Example 4

A powder composition was prepared using substantially the technique of Example 1 except that the filler used was graphite powder used at a level of 85% by weight (70% by volume). The resulting powder was run on an automatic preforming machine which produced annular rings of dimensions 2 inches (diameter) x 1/16 inch (thickness) (50.8 mm x 1.59 mm). The resulting preforms were sintered as in Example 1; no shrinkage or distortion could be detected.

Examples 5 and 6 (comparison)

Attempts to make a powder composition using the technique of Example 3 were made but using the polyethersulphone homopolymer having repeat units of formula

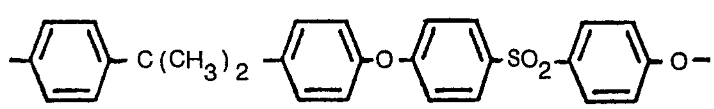

('Udel'®; Union Carbide Corporation) — Example 5, and polyethersulphone copolymer having repeat units of formulae

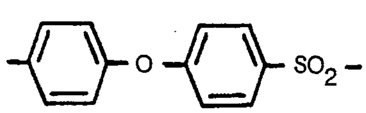

and

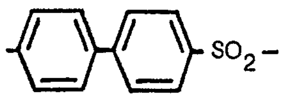

('720P'; ICI) — Example 6, in place of the polyethersulphone of Example 3. However in both cases, although a viscous stirrable dispersion was formed, this would not solidify on continued stirring and instead was simply moved around the mixing bowl. After 1 hour's stirring in each case the attempt was abandoned.

**Claims**

1. A method of producing a compression- or sinter mouldable powder composition comprising an aromatic polyethersulphone homopolymer containing the repeat unit of formula

and a powdery filler, which method comprises
(a) preparing a viscous but stirrable dispersion of the filler in dichloromethane which dispersion contains said polyethersulphone,
(b) stirring the dispersion to produce a soft solid which breaks down into a powder, and
(c) removing residual dichloromethane from the powder produced in step (b)

2. A method according to claim 1 in which the dispersion in step (a) is made by preparing a dispersion of the filler in dichloromethane and dissolving said polyethersulphone in at least the dichloromethane of the dispersion.

3. A method according to claim 1 in which the dispersion in step (a) is made by dissolving said polyethersulphone in dichloromethane and preparing a dispersion of the filler in at least the dichloromethane of the solution.

4. A method according to any one of claims 1 to 3 in which the filler is incorporated at a level of 20%—90% by weight based on the weight of the polyethersulphone plus the filler.

5. A method according to any one of claims 1 to 3 in which the filler is incorporated at a level of 40%—80% by volume based on the volume of the polyethersulphone plus the filler before use.

6. A method according to any one of claims 1 to 5 in which the polyethersulphone used has reduced viscosity (RV) below 0.45.

7. A method according to any one of claims 1 to 5 in the polyethersulphone used has reduced viscosity (RV) above 0.45.

8. A powder composition made by the method according to any one of claims 1 to 7.

9. A moulded article produced from a powder composition made by the method according to any one of claims 1 to 7.

## Revendications

1. Procédé pour la production d'une composition pulvérulente pouvant être moulée par compression ou frittage, renfermant un homopolymère de polyéthersulfone aromatique comportant l'unité récurrente de formule:

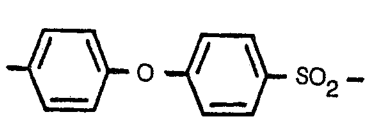

et une charge pulvérulente, ce procédé consistant:
(a) à préparer une dispersion visqueuse mais pouvant être agitée de la charge dans le dichlorométhane, cette dispersion contenant cette polyéthersulfone,
(b) à agiter la dispersion pour produire un solide mou se désagrégeant pour donner une poudre, et
(c) à éliminer le dichlorométhane résiduel produit à partir de la poudre au cours du stade (b).

2. Procédé suivant la revendication 1, caractérisé en ce que la dispersion du stade (a) est produite en préparant une dispersion de la charge dans le dichlorométhane et en faisant dissoudre cette polyéthersulfone au moins dans le dichlorométhane de la dispersion.

3. Procédé suivant la revendication 1, caractérisé en ce que la dispersion du stade (a) est préparée en faisant dissoudre cette polyéthersulfone dans le dichlorométhane et en préparant une dispersion de la charge au moins dans le dichlorométhane de la solution.

4. Procédé suivant l'une quelconque des revendications 1 à 3, caractérisé en ce que la charge est incorporée à raison de 20 à 90% en poids sur la base du poids de la polyéthersulfone plus la charge.

5. Procédé suivant l'une quelconque des revendications 1 à 3, caractérisé en ce que la charge est incorporée à raison de 40 à 80% en volume sur la base du volume de la polyéthersulfone plus la charge avant emploi.

6. Procédé suivant l'une quelconque des revendications 1 à 5, caractérisé en ce que la polyéthersulfone utilisée a une viscosité réduite (VR) inférieure à 0,45.

7. Procédé suivant l'une quelconque des revendications 1 à 5, caractérisé en ce que la polyéthersulfone utilisée a une viscosité réduite (VR) supérieure à 0,45.

8. Composition pulvérulente produite par le procédé suivant l'une quelconque des revendications 1 à 7.

9. Objets ou articles moulés produits à partir d'une composition pulvérulente préparée par le procédé suivant l'une quelconque des revendications 1 à 7.

## Patentansprüche

1. Verfahren zum Herstellen einer durch Formpressen oder Sintern formbaren Pulverzusammensetzung, die ein aromatisches Polyethersulfon-Homopolymer mit der Struktureinheit der Formel

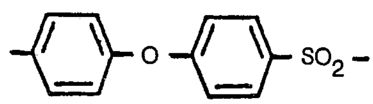

und einen pulverförmigen Füllstoff enthält, mit den folgenden Schritten:
(a) Herstellen einer zähflüssigen, jedoch rührbaren, das Polyethersulfon enthaltenden Dispersion des Füllstoffs in Dichlormethan,
(b) Rühren der Dispersion zur Herstellung eines weichen, unter Bildung eines Pulvers zerfallenden Feststoffs und
(c) Entfernen von restlichem Dichlormethan aus dem in Schritt (b) hergestellten Pulver.

2. Verfahren nach Anspruch 1, bei dem die Dispersion in Schritt (a) dadurch hergestellt wird, daß man eine Dispersion des Füllstoffs in Dichlormethan herstellt und das Polyethersulfon in mindestens dem Dichlormethan der Dispersion auflöst.

3. Verfahren nach Anspruch 1, bei dem die Dispersion in Schritt (a) dadurch hergestellt wird, daß man das Polyethersulfon in Dichlormethan auflöst und eine Dispersion des Füllstoffs in mindestens dem Dichlormethan der Lösung herstellt.

4. Verfahren nach einem der Ansprüche 1 bis 3, bei dem der Füllstoff in einer Menge von 20 bis 90 Gew.-%, bezogen auf das Gesamtgewicht des Polyethersulfons und des Füllstoffs, eingemischt wird.

5. Verfahren nach einem der Ansprüche 1 bis 3, bei dem der Füllstoff in einer Menge von 40 bis 80 Vol.-%, bezogen auf das Gesamtvolumen des Polyethersulfons und des Füllstoffs vor der Verwendung, eingemischt wird.

6. Verfahren nach einem der Ansprüche 1 bis 5, bei dem das verwendete Polyethersulfon eine reduzierte Viskosität (RV; gemessen bei 25°C mit einer Lösung des Polyethersulfons in Dimethylformamid, die 1 g des Polyethersulfons in 100 $cm^3$ Lösung enthält) von weniger als 0,45 hat.

7. Verfahren nach einem der Ansprüche 1 bis 5, bei dem das verwendete Polyethersulfon eine reduzierte Viskosität (RV) von mehr als 0,45 hat.

8. Pulverzusammensetzung, hergestellt nach dem Verfahren nach einem der Ansprüche 1 bis 7.

9. Formkörper bzw. Formgegenstand, erzeugt aus einer Pulverzusammensetzung, die nach dem Verfahren nach einem der Ansprüche 1 bis 7 hergestellt worden ist.